# EUROPÄISCHE PATENTANMELDUNG

(11) **EP 2 192 069 A1**
(43) Veröffentlichungstag der Anmeldung: **02.06.2010**
(21) Anmeldenummer: 09013553.4
(22) Anmeldetag: 28.10.2009
(51) Int. Cl.: B65H 49/30, B65H 59/04, F16B 35/06

(54) **Lagermittel für Schlauchwaren**

(30) Priorität: 26.11.2008 DE 102008059378
(71) Anmelder: Schnippering, Axel, 58553 Halver (DE)
(72) Erfinder: Schnippering, Axel, 58553 Halver (DE)
(74) Vertreter: Dörner, Kötter & Kollegen

(57) **Zusammenfassung**

Die Erfindung betrifft ein Lagermittel für Schlauchwaren, umfassend eine drehbar in einem Unterteil (3) gelagerte Scheibe (21) zur Aufnahme der Schlauchwaren, die wenigstens drei Spannholme (22) aufnimmt, welche synchron bewegbar auf der Scheibe (21) angeordnet sind, wobei in der Scheibe (21) bogenförmige Aussparungen (23) eingebracht sind, in denen die Spannholme (22) geführt sind. Die Spannholme (22) sind jeweils exzentrisch an einem Kettenrad (24) lösbar befestigt, wobei die Kettenräder (24) an der den Spannholmen (22) entgegengesetzten Unterseite der Scheibe (21) an dieser drehbar befestigt und über eine Kette (25) miteinander verbunden sind. Ein weiteres Kettenrad ist angeordnet, das mit der Kette (25) verbunden ist und über das die Ketten (25) antreibbar ist. Zwischen der Scheibe (21) und dem Unterteil (3) ist eine Reibscheibe (35) angeordnet, welche zwei parallel zueinander angeordnete Reibflächen aufweist.

## Beschreibung

Die Erfindung betrifft ein Lagermittel für Schlauchwaren nach dem Gegenstand des Oberbegriffs des Patentanspruchs 1.

Schlauchwaren werden regelmäßig als sog. Ringware geliefert. Diese Ringe sind im Allgemeinen über Metallbänder oder Klebestreifen fixiert. Beim Lösen dieser Fixiermittel verliert der Schlauchring seine Stabilität, wodurch die Handhabung erschwert ist. Insbesondere beim Konfektionieren von Meterware erweist sich die Handhabung als schwierig, da sich der ehemalige Schlauchring beim Abwickeln zusätzlich verwindet.

Dieses Problem wird durch die DE 10 2007 025 724 gelöst, in der ein Lagermittel für Schlauchwaren offenbart ist, umfassend eine drehbar gelagerte Scheibe zur Aufnahme der Schlauchwaren, die wenigstens drei Spannholme aufnimmt, welche synchron bewegbar auf der Scheibe angeordnet sind, wobei in der Scheibe bogenförmige Aussparungen eingebracht sind, in denen die Spannholme geführt sind. Die Spannholme sind dabei jeweils exzentrisch an einem Kettenrad lösbar befestigt, wobei die Kettenräder an der dem Spannholmen entgegengesetzten Unterseite der Scheibe an dieser drehbar befestigt und über eine Kette miteinander verbunden sind und wobei ein weiteres Kettenrad angeordnet ist, das mit der Kette verbunden ist und über das die Kette antreibbar ist.

Bei der aus der DE 10 2007 025 724 bekannten Lagervorrichtung gestaltet sich in der Praxis jedoch problematisch, dass die durch den Abwickelvorgang in Schwung gebrachte Masse, bestehend aus drehbarer Scheibe mit aufliegender Ringware nur langsam zum Stillstand kommt, wodurch Übermengen an Ringware von der Scheibe abgeworfen werden.

Hier will die Erfindung Abhilfe schaffen. Der Erfindung liegt die Aufgabe zugrunde, ein Lagermittel für Schlauchwaren zu schaffen, bei dem ein übermäßiges Abwerfen von Ringware nach Beendigung des Abwickelvorgangs verhindert ist. Gemäß der Erfindung wird diese Aufgabe durch die Merkmale des kennzeichnenden Teils des Patentanspruchs 1 gelöst. Durch die beiden Reibflächen der Reibscheibe wird eine von dem aufliegenden Gewicht der Ringware abhängige Bremswirkung erzielt, wodurch ein im Wesentlichen unabhängig vom aufliegenden Gewicht gleich schneller Abbremsvorgang bewirkt ist.

In Weiterbildung der Erfindung ist die Reibscheibe über wenigstens eine Feder mit dem Unterteil verbunden. Bevorzugt ist die Vorspannung der wenigstens einen Feder einstellbar. Hierdurch ist die Reibkraft zwischen Reibring und Unterteil einstellbar, wodurch wiederum eine Einstellung der effektiven Bremswirkung ermöglicht ist.

In Ausgestaltung der Erfindung ist an den Spannholmen an ihrem der Scheibe entgegengesetzten Ende wenigstens ein schwenkbar gelagerter Hebel angeordnet. Hierdurch ist das Einschrauben der Spannholme in die zugehörigen Kettenräder erleichtert.

Bevorzugt weisen die Spannholme jeweils zwei diametral zueinander angeordnete auf einer gemeinsamen Achse schwenkbar gelagerte Hebel auf. Hierdurch ist der Einschraubvorgang der Spannholme weiter erleichtert; der Einsatz zusätzlicher Werkzeuge zum Verspannen der Spannholme ist nicht erforderlich.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Fig. 1:: die schematische Darstellung eines Lagermittels für Schlauchwaren;
- Fig. 2:: die Darstellung des Oberteils des Lagermittels aus Fig. 1 in der Ansicht von unten;

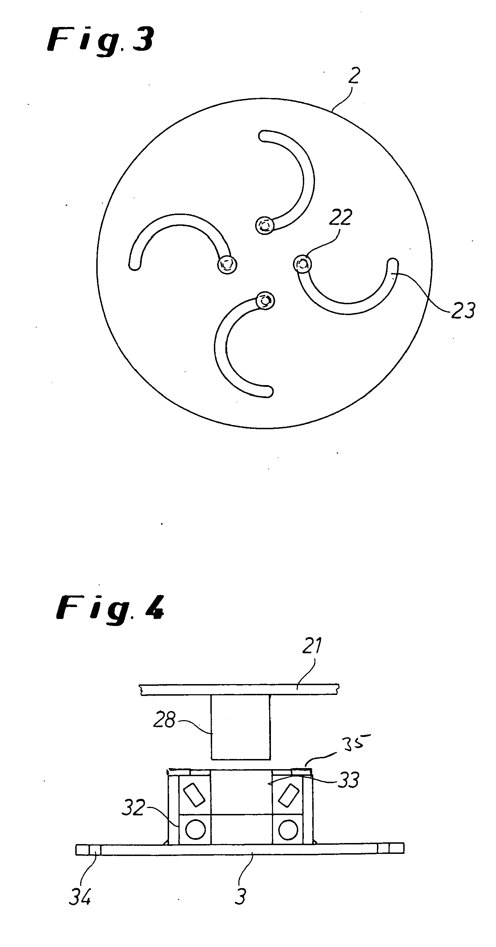

- Fig. 3:: die Darstellung des Oberteils aus Fig. 2 in der Ansicht von oben;
- Fig. 4:: die schematische Darstellung der Lagerung des Oberteils in dem Unterteil des Lagermittels und

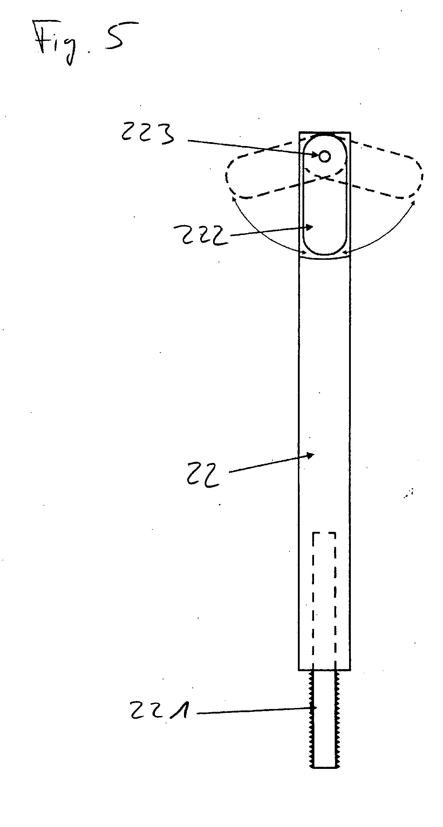

- Fig. 5:: die Darstellung eines Spannholms mit schwenkbaren Hebeln.

Das als Ausführungsbeispiel gewählte Lagermittel 1 besteht im Wesentlichen aus einem Oberteil 2 und einem Unterteil 3.

Das Oberteil 2 umfasst im Ausführungsbeispiel eine kreisrunde Scheibe 21, in die vier kreisbogenförmige Aussparungen 23 eingebracht sind. Die Aussparungen 23 nehmen jeweils einen Spannholm 22 auf, welcher in der jeweiligen Aussparung 23 geführt ist. Die Spannholme 22 sind weitgehend zylinderförmig ausgeführt. An ihrem der Scheibe 21 zugewandten Ende weisen die Spannholme 22 ein Gewindestück 221 auf, welches durch die Aussparung 23 hindurchtritt. An ihrem dem Gewindestück 221 gegenüberliegenden Ende sind jeweils diametral zueinander an den Spannholmen 22 zwei Hebel 222 angeordnet. Die Hebel 222 sind auf einer durchgehenden Achse 223 schwenkbar befestigt. Die Hebel 222 dienen dem leichteren Einschrauben der Spannholme 22 in die zugehörigen Kettenräder 24.

An ihrer den Spannholmen 22 gegenüberliegenden Unterseite sind an der Scheibe 21 vier Kettenräder 24 drehbar befestigt. Die Kettenräder 24 sind mit einer exzentrisch angeordneten Gewindebohrung 241 versehen, welche derart angeordnet ist, dass sie bei Rotation des Kettenrades 24 den Kreisbogen der Aussparung 23 durchläuft. In die Gewindebohrung 241 des Kettenrades 24 ist das Gewindestück 221 eines Spannholms 22, das durch die Aussparung 23 hindurchtritt, eingeschraubt. Durch Verdrehung des Spannholms 22 und dessen Gewindestück 221 kann der Spannholm 22 gegen die Scheibe 21 verklemmt werden, so dass eine Arretierung des Spannholms 22 ermöglicht ist. Alternativ sind auch andere Verbindungstechniken zur Verbindung des Spannholms 22 mit dem Kettenrad 24 möglich. Die Kettenräder 24 sind über eine Kette 25 miteinander verbunden.

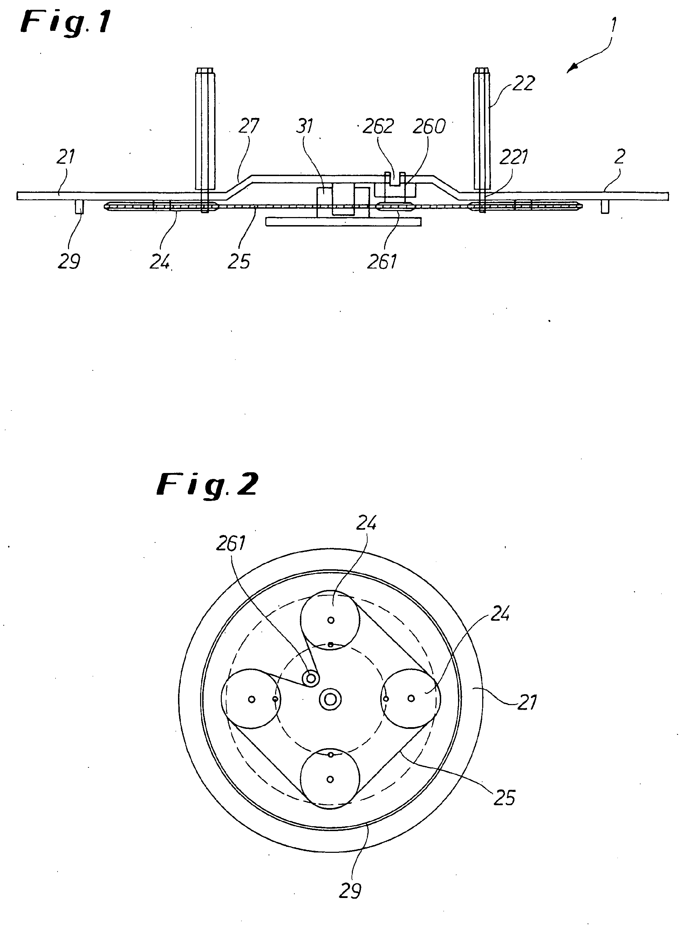

Im Ausführungsbeispiel ist die Scheibe 21 mittig mit einer Wölbung 27 zur Aufnahme des Lagerflansches 31 des Unterteils 3 versehen. Zentriert ist in der Wölbung 27 eine Achse 28 zur drehbaren Lagerung des Oberteils 2 in dem Unterteil 3 angeordnet. Im Bereich der Wölbung 27 ist im Ausführungsbeispiel weiterhin exzentrisch ein Verstellmodul 26 als Antriebsmittel für die Kettenräder 24 über die Kette 25 angeordnet. Das Verstellmodul 26 besteht im wesentlichen aus einem Zylinderstück 260, das durch die Scheibe 21 in Richtung der Scheibenunterseite hindurchtritt und an dessen Ende auf Höhe der Kettenräder 24 ein im Durchmesser gegenüber den Kettenrädern 24 verkleinert ausgeführtes Kettenrad 261 angeordnet ist. An seinem dem Kettenrad 261 gegenüberliegenden Ende ist in das Zylinderstück 260 eine Aufnahme 262 für einen - nicht dargestellten - Drehgriff eingebracht. Die Kettenführung ist in Fig. 2 dargestellt. Dabei ist die Kette in Bezug auf die Drehachse der Scheibe 21 um die Kettenräder 24 außen geführt; das kleinere Kettenrad 261 des Verstellmoduls 26 wird auf seiner der Drehachse der Scheibe 21 zugewandten Innenseite von der Kette 25 umschlungen. Zum Schutz der Kettenräder ist auf der Unterseite der Scheibe 21 umlaufend ein Steg 29 angeordnet.

Das Unterteil 3 umfasst einen Lagerflansch 31 zur Aufnahme der Achse 28 des Oberteils 2. In dem Lagerflansch 31 sind im Ausführungsbeispiel zwei Lagerringe 32 eingebracht, wobei beide Lagerringe als Radialkugellager ausgeführt sind. Die Lagerringe 32 bilden eine Achsaufnahme 33 für die Achse 28 des Oberteils 2. Weiterhin sind in das Unterteil 3 Bohrungen 34 zur Befestigung des Unterteils 3 beispielsweise an einem Regalboden eingebracht.

Oberhalb der Lagerringe 32 ist auf dem Unterteil 3 ein Reibring 35 angeordnet. Der Reibring 35 weist zwei parallel zueinander angeordnete Reibflächen auf, welche in Abhängigkeit der auf die Scheibe 21 einwirkenden Gewichtskraft eine Bremskraft zwischen dem Unterteil 3 und der Scheibe 21 bewirkt. Im Ausführungsbeispiel ist der Reibring 35 über drei - nicht dargestellte - um ein 120° versetzt angeordnete Federn mit dem Unterteil 3 verbunden. Dabei sind die - nicht dargestellten - Federn derart ausgebildet, dass ihre Vorspannung einstellbar ist. Mittels der Federn lässt sich die Reibkraft zwischen Reibring 35 und Unterteil 3 einstellen, wodurch wiederum die effektive Bremswirkung einstellbar ist.

Selbstverständlich ist das erfindungsgemäße Lagemittel auch für andere Wickelwaren, wie beispielsweise Kabelwaren einsetzbar. Kabelwaren werden jedoch überwiegend als Trommelware geliefert, wodurch sich die eingangs geschilderte Problematik nicht stellt.

Die erfindungsgemäße Vorrichtung hat den Vorteil, dass nach Beendigung des Abwickelvorgangs, also der Konfektionierung einer gewünschten Länge einer Ringware, die in Schwung gebrachte Masse der Scheibe 21 mit aufliegender Ringware schnell zum Stillstand kommt, wodurch keine Übermenge an Ringware von der Scheibe 21 abgeworfen wird. Beim Abwickelvorgang, welcher eine Drehung der Scheibe 21 bewirkt, entsteht eine Reibkraft zwischen den Reibflächen der Reibscheibe 35 und dem Unterteil 3 bzw. der Scheibe 21, wodurch die Scheibe 21 abgebremst wird. Dabei ist die Bremskraft abhängig von der aufliegenden Last. Je größer die Last, desto größer ist die durch die Reibscheibe 35 bewirkte Bremskraft. Das hat den gewünschten Effekt, dass unterschiedliche Gewichte der aufliegenden Ringwaren immer zu einem im Wesentlichen gleich schnellen Abbremsvorgang führen.

## Patentansprüche

1. Lagermittel (1) für Schlauchwaren, umfassend eine drehbar in einem Unterteil (3) gelagerte Scheibe (21) zur Aufnahme der Schlauchwaren, die wenigstens drei Spannholme (22) aufnimmt, welche synchron bewegbar auf der Scheibe (21) angeordnet sind, wobei in der Scheibe (21) bogenförmige Aussparungen (23) eingebracht sind, in denen die Spannholme (22) geführt sind, wobei die Spannholme (22) jeweils exzentrisch an einem Kettenrad (24) lösbar befestigt sind, wobei die Kettenräder (24) an der den Spannholmen (22) entgegengesetzten Unterseite der Scheibe (21) an dieser drehbar befestigt und über eine Kette (25) miteinander verbunden sind und wobei ein weiteres Kettenrad (261) angeordnet ist, das mit der Kette (25) verbunden ist und über das die Kette (25) antreibbar ist, **dadurch gekennzeichnet, dass** zwischen der Scheibe (21) und dem Unterteil (3) eine Reibscheibe (35) angeordnet ist welche zwei parallel zueinander angeordnete Reibflächen aufweist.

2. Lagermittel nach Anspruch 2, **dadurch gekennzeichnet, dass** die Reibscheibe (35) über wenigstens eine Feder mit dem Unterteil (3) verbunden ist.

3. Lagermittel nach Anspruch 3, **dadurch gekennzeichnet, dass** die Vorspannung der wenigstens einen Feder einstellbar ist.

4. Lagermittel nach einem der vorgenannten Ansprüche, **dadurch gekennzeichnet, dass** an den Spannholmen (22) an ihrem der Scheibe (21) entgegen gesetzten Ende wenigstens ein schwenkbar gelagerter Hebel (222) angeordnet ist.

5. Lagermittel nach Anspruch 4, **dadurch gekennzeichnet, dass** die Spannholme (22) jeweils zwei diametral zueinander angeordnete auf einer gemeinsamen Achse (223) schwenkbar gelagerte Hebel (222) aufweisen.
